# EUROPEAN PATENT APPLICATION

(11) **EP 1 447 390 A1**
(43) Date of publication of application: **18.08.2004**
(21) Application number: 01938707.5
(22) Date of filing: 15.06.2001
(51) Int. Cl.: C04B 28/04, C04B 14/04, C04B 24/26, C08K 3/22, C08K 3/34, C08L 33/08, C08L 33/12

(54) **COMPOSITE ACRYLIC RESIN COMPOSITION**

(71) Applicant: Shimpo, Shigeaki, Taito-ku, Tokyo 110-0005 (JP); HI-BX Co., Ltd, Yokohama-shi, Kanagawa 231-0046 (JP)
(72) Inventor: SHIMPO, Shigeaki, Taito-ku, Tokyo 110-0005 (JP)
(74) Representative: Zimmermann, Gerd Heinrich
(86) International application number: PCT/JP2001/005150
(87) International publication number: WO 2002/102737

(57) **Abstract**

An acrylic resin composite which comprises a powder material prepared by mixing an aggregate comprising a powder of a mineral having a permanent electric charge with a low alkali cement and a resin emulsion, wherein the resin emulsion comprises an acrylic resin comprising methyl acrylate and ethyl acrylate and an alkali ion water. The composite can be used in new construction, mending and reinforcement of a steel skeleton structure and the like for providing a structure which has high moisture permeability and also excellent protection to the penetration of water, exhibits rapid hardening, is excellent in the properties after hardening such as strength and durability, and is improved in adhesiveness and easiness in being mended.

## Description

### Field of the Invention

This invention relates to an acrylic resin composite, which is used in concrete or mortar for construction, to provide a protective layer against deterioration (neutralization, freeze/thaw, brine damage, alkaline reaction) of aged concrete structures, coating of steel structures, maintenance materials, and reinforcing materials. More specifically, it relates to a resin composite using an alkali-ion water whose clusters are finely divided from each other.

### Description of the Related Art

Epoxy-resin or acrylic resin composites containing silica sand, sand, pulverized iron, pulverized glass, or pulverized organic and inorganic materials have been used as composite resin cements or mortars, coating materials, protective materials for cement constructions, maintenance materials, and reinforcing materials.

However, such prior-art resin composites take a long time to be cured for use in concrete, which requires a primer or a sealer as a base component or an adhesive, due to the difficulty of independent use of concrete. These composites do not adhere well to concrete, and they have poor affinity with concrete. Also, they are so weak in compressive strength, bending strength, tensile strength, and shear strength that they are always reinforced with sheets of fabric, carbon, nylon, or the like.

In addition, due to the insufficient affinity between the prior-art resin composites and concrete, those composites generally adhere so poorly to concrete that they are sometimes easily peeled off from the base concrete within 6 months, or within 2 years at the latest. Moreover, some composites that are applicable to fresh concrete are sometimes inapplicable to aged concrete. In other words, most of the prior-art resin composites have some good points but also some bad points. Composites that are superior in terms of durability, anti-earthquake properties, weather resistance, water-proofing, adhesiveness, anti-shock properties, and heat resistance (-30□C to +40□C) are always wanted, especially for maintaining and reinforcing aged concrete structures.

This invention has been made in light of the above problems, and one of its objects is to provide a resin composite that is able to be used without problems both in fresh-concrete structures and in maintaining or reinforcing steel structures or aged concrete structures. The present invention uses, as the resin composite, an acrylic resin aqueous emulsion, because an aqueous emulsion can lessen the technical difficulties when used in construction better than solvent-type or reaction-type emulsions, and it can satisfy society's environmental-protection requirements.

By using an acrylic resin aqueous emulsion, the present invention also aims to provide an acrylic resin composite that (1) has low moisture permeability and is highly waterproof, (2) has rapid curability, (3) has excellent post-cure strength and durability, (4) is highly adhesive to concrete, and (5) is suitable for maintenance uses.

### Disclosure of the Invention

To achieve the above mentioned objects, the invention of Claim 1 is an acrylic resin composite comprising: (a-1) a pulverized aggregate that consists of minerals having a permanent electric charge, and (a-2) a pulverized low-alkaline cement composed of the components listed below; and (b) an acrylic resin emulsion that is prepared by homogenizing an acrylic resin that includes at least methyl methacrylate and ethyl acrylate in alkali-ion water.

| | |
|---|---|
| Silicon dioxide | 20-30 % by wt. |
| Aluminum oxide | 0.1-2.5 % by wt. |
| Ferric oxide | 0.01-1.00 % by wt. |
| Calcium oxide | 60-80 % by wt. |
| Magnesium oxide | 0.2-1.0 % by wt. |
| Sodium oxide | 0.2-0.4 % by wt. |

The invention of Claim 2 is the acrylic resin composite of Claim 1, but wherein said alkali-ion water has a pH of 8-10 and a half-band width of 90 ± 10 Hz in its ¹⁷O nuclear magnetic-resonance signal.

The invention of Claim 3 is an acrylic resin composite of Claim 1 or Claim 2, but wherein said powder component includes 55 ± 15 % by wt. of said pulverized aggregate and 45 ± 15 % by wt. of said pulverized low-alkaline cement, and wherein said powder component is mixed with said resin emulsion at a ratio of 210-250 ml of said resin emulsion to 1 kg of said powder component.

### Brief Description of the Drawings

Fig. 1 shows a schematic view illustrating the state of acrylic resin particles and water clusters in a resin emulsion in which structural-phase inversion has occurred.
Fig. 2 shows a schematic view illustrating the state of acrylic resin particles and water clusters in the prior-art acrylic resin emulsion.

### Best Mode for Carrying Out the Invention

Preferred embodiments of the present invention will now be described.

The acrylic resin composite of the present invention is composed of at least (a) a powder component that includes (a-1) a pulverized aggregate selected from minerals having a permanent electric charge, and (a-2) a pulverized low-alkaline cement made of the components listed below, and (b) an acrylic resin emulsion. In actual use, the acrylic resin composite is prepared, for example, by adding 210-250 ml of the acrylic resin emulsion to 1 kg of a powder component that is a mixture of the pulverized aggregate and the pulverized low-alkaline cement in a ratio of 55 ± 15 to 45 ± 15 (percent by weight).

Garnet, which is a mineral having a permanent electric charge, is generally used as the aggregate, sometimes together with quartz, silicon ,alumina (Al₂O₃), WC, TiC, B₄C, SiC, Si₃N₄, glass, artificial diamond, or other material. The size of the garnet particle is preferably 200-600 µm. If the size is less than 200 µm, the finished emulsion is too viscous, like a paint-like state, and thereby the strength of the resin composite is reduced. However, if the size of the particle is more than 600 µm, the dispersion of the pulverized low-alkaline cement in the emulsion becomes deteriorated and the strength of the resin composite is reduced.

Such a garnet has a crystalline structure, which is generally called "a garnet-type structure," and it has a +/- permanent electric charge. By using such a garnet as the aggregate, the hardness of the resin composite can be enhanced. In particular, the minus ions or the plus ions derived from the permanent electric charge dramatically increase the hardness of the composite.

A garnet, which can be of various types, including an iron garnet or a yttrium-aluminum garnet, is applied after being pulverized and then mixed well. Tourmaline, a natural stone, is also usable, because like garnet it has a permanent electric charge.

If one or more of any of quartz, silicon, alumina, WC, TiC, B₄C, SiC, Si₃N₄, glass, or artificial diamond, is blended with garnet, the amount of the garnet in the composite should be adjusted so as not to lower too much the total permanent electric charge. Usually garnet should be added so as to constitute at least 40% (by weight) of the total combined amount of the aggregate and the low-alkaline cement.

As the low-alkaline cement, white Portland cement having the composition specified immediately below (indicated by oxide) is usable. Usually, the cement contains 2.1-2.3 wt % of SO₃ and 0.01-0.02 wt % (as Cl) of chlorinated compounds.

| | |
|---|---|
| Silicon dioxide | 20-30 % by wt. |
| Aluminum oxide | 0.1-2.5 % by wt. |
| Ferric oxide | 0.01-1.00 % by wt. |
| Calcium oxide | 60-80 % by wt. |
| Magnesium oxide | 0.2-1.0 % by wt. |
| Sodium oxide | 0.2-0.4 % by wt. |

The low-alkaline cement usually has a bulk specific volume of 400-430 m² /kg and a bulk density of 1,100-1,300 kg/m³, and it contains the following hydraulic materials:

| | |
|---|---|
| 3 CaO·SiO₂ | 64-80 % by wt. |
| 3 CaO·SiO₂ | 15-19 % by wt |
| 3 CaO·Al₂O₃ | 3.6-5.4 % by wt. |
| 4 CaO·Al₂O₃·Fe₂O₃ | 0.8-1.2 % by wt. |
| 4 CaO·Al₂O₃·Fe₂O₃+ 2 (3CaO·Al₂O₃) | 8-19 % by wt. |

In addition, pigments for coloring can be added to the pulverized low-alkaline cement. The pigments are preferably inorganic pigments, although any pigments, including organic pigments, are usable so long as they do not adversely affect a permanent electric charge.

The powder component that includes pulverized low-alkaline cement and a pulverized aggregate in a ratio of 45 ± 15 to 55 ± 15 (% by wt.) has a synergetic effect on the hardening rate and hardening properties.

The resin emulsion is produced from acrylic resins and alkali-ion water. The acrylic resins include methyl methacrylate and ethyl acrylate. Other acrylic resins, such as acrylamides and acrylonitriles, can be further added thereto.

The alkali-ion water is obtained by electrolysis of crude water to an alkaline state of pH 8-10 followed by application of a wave force. By this means the resultant alkaline water has fine water clusters, because the hydrogen bonds in the water molecules have been broken. The half-band width, as measured by the water's ¹⁷O nuclear magnetic-resonance signal, is within 90 ± 10 Hz.

Crude water, such as tap water or natural water, contains some minerals even after being filtered through a membrane or a hollow fiber. If deionized or distilled water is used, some minerals must be added. This invention does not limit the kind of minerals, although iron oxide is preferable.

The alkali-ion water used for this invention is taken at the cathode terminal of the electrolysis device immediately after the water has changed to an alkaline level of pH 8-10 due to hydroxyl ions that have been produced by the electrolysis. The electrolysis is preferably carried out at low voltage using external power, an electromotive force generated between two different metals, or the permanent electric charges of some minerals.

Hydroxyl ions are extremely unstable in alkaline water that is obtained by electrolyzing deionized water, whereas hydroxyl ions in alkaline water from tap water or natural water are stable for the first 1 to 2 hours after electrolysis, due to the presence of minerals. Alkaline water after electrolysis contains water clusters whose hydrogen bonds have been broken and that are further broken by the application of a wave force.

The wave force mentioned above is provided by magnetic force generated by a permanent magnet or an electromagnet, by electromagnetic waves due to the far-infrared radiation of ceramics, by supersonic waves, or by shock waves. In the embodiment of this invention, the wave force was produced by using the magnetic force generated by a permanent magnet.

The quantitative measurement of the size of the water clusters formed by hydrogen bonding has not yet been established. However, it is known that the relaxation time of the spins between ¹⁷O nuclei is related to the half-band width in the magnetic-resonance signal, which is related to the size of the water clusters. In this invention, Based on this principle, the half-band width in the ¹⁷O nuclear magnetic-resonance signal is adopted as an indicator of the size of the water clusters, because numerical control of the alkaline water becomes possible.

According to this method, the half band width of the ¹⁷O nuclear magnetic-resonance signal of tap water or de-ionized water is said to be within 160-130 Hz, whereas that of the alkali-ion water of this invention is 90 ± 10 Hz because the water clusters are finely divided because the hydrogen bonds in the water molecules have been broken.

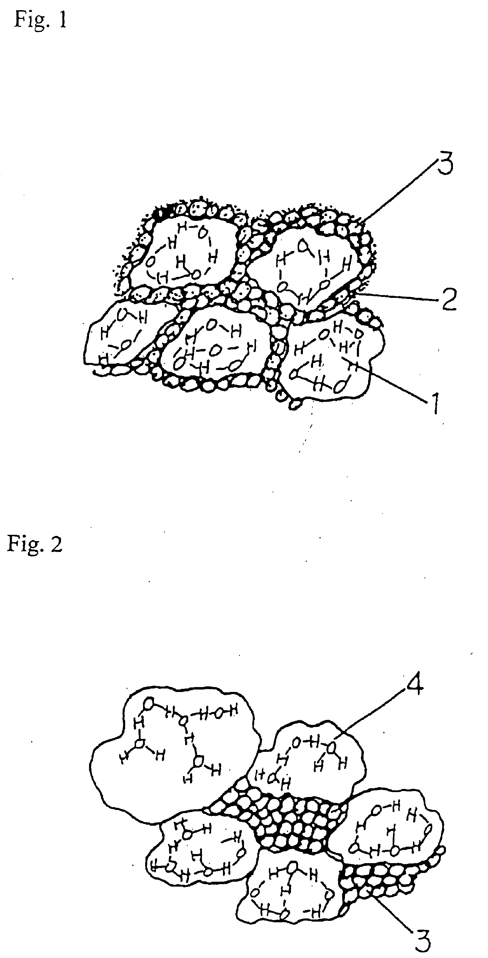

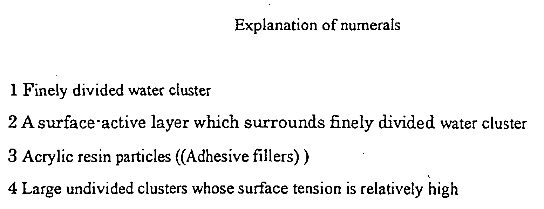

The acrylic resin emulsion is produced by a method such that pulverized acrylic resin (adhesive filler) is added to the alkali-ion water, which has a pH of 8-10, immediately after electrolysis, accompanied by vigorous stirring. The allowable amount of the acrylic resin in the emulsion by this invention is 41.5 ± 5 % by wt., whereas that of the acrylic resin in the prior-art acrylic resin emulsion using tap water or de-ionized water is substantially about 35%. From this result, it is estimated that the emulsion of this invention has undergone a structural phase change, as shown in Figs. 1 and 2.

Fig. 1 shows a schematic view illustrating the state after a structural phase change of the emulsion has occurred. The outer circumference of each finely divided water cluster 1 is surrounded by a surface-active layer 2 formed by hydroxyl ions. The surface-active layer 2 makes the particles of acrylic resin (adhesive fillers) 3 separate from each other.

Fig. 2 shows a schematic view illustrating the state of the emulsion when tap water is used. There are large undivided clusters 4 whose surface tension is relatively high. Due to the lack of hydroxyl ions, the particles of acrylic resin 3 coagulate together and are surrounded by water clusters, resulting in a heterogeneous condition.

Using alkali-ion water that has a pH of 8-10, the acrylic resin emulsion increases the amount of the acrylic resin that can be contained in the resin composite without too greatly enhancing the viscosity of the emulsion, and it can be expected that the homogeneity of the resin composite will be improved. Thus, thanks to the structural phase change, more acrylic resin particles in the resin composite directly contact the adhesive concrete surface and the resin composite's properties - such as its dispersability, fluidity, permeability, and hardening - are improved, realizing a high adhesive force such as would never be expected in prior-art resin composites.

In addition, due to the synergistic effect of the structural phase change of the emulsion and the permanent electric charge of the garnet, the acrylic resin composite decreases the permeability of the acrylic resin composite into concrete and the waterproofing property of the acrylic resin composite is improved, making it more suitable for maintenance or reinforcement of aged concrete structures.

Although, due to the above-mentioned effect, the allowable amount of the powder component, which is the total of the pulverized low-alkaline cement and the pulverized aggregate, seems to be more than 45 % by wt., it is desirable from a practical point of view to limit the total to within 30-35 % by wt. in order to achieve a balance among the acrylic resin composite's various properties, such as its fluidity, viscosity, hardening speed, and strength.

Thus, due to the improved hardening properties and the simultaneous hardening of the acrylic resin and the low-alkaline cement, the acrylic resin composite of this invention can realize accelerated hardening and enhancement of bending strength, shear strength, tensile strength, and compressive strength. In the construction of structures, shortening of the pot life or the time required for the initial hardening can be achieved as a benefit of this invention.

Preferred embodiments of the present invention are described below, but the present invention is not limited to the following.

### Examples

### Example 1 and Comparative Example 1: Structural Phase Change

In this example, the effect of structural phase change was made clear by using four kinds of water - tap water, de-ionized water, alkaline water, and pH-8.5 alkali-ion water - whose half-band widths of ¹⁷O nuclear magnetic-resonance signals are 150 ± 10, 130 ± 10, 110 ± 10, and 90 ± 10 Hz, respectively.

Using each type of water, four kinds of emulsion having a viscosity of 150 ± 10 cps were prepared using the same pulverized acrylic resin having an average particle size of 1 □m. The increase in the respective amounts of acrylic resin and the degree of homogeneity retained were measured using an average of 3 samples of each type of water. The results are shown in Table 1.

**Table 1.**

| The Effect of Variation in the Half-Band Width of Water on the Average Increase of Amount of Acrylic Resin and on Average Retention of Homogeneity | | |
|---|---|---|
| **Half-Band Width (Hz)** | **Average Increase of Amount** **of Acrylic Resin (fillers) (%)** | **Average Retention of** **Homogeneity (after 24 hrs.) (%)** |
| 150±10 | 0 | 0 |
| 130±10 | 5 | 10 |
| 110±10 | 10 | 40 |
| 90±10 | 20 | 90 |

The results indicate that the structural phase change occurred at about 100 Hz of the half-band widths of the ¹⁷O nuclear magnetic-resonance signal.

### Example 2: Hardening of the Acrvlic Resin Composite Using Alkali-Ion Water of pH 9.0

A powder composition was prepared using 55 % by wt. of pulverized garnet (average size of particles: about 380 µm) and 45 % by wt. of pulverized low-alkaline cement (bulk specific volume: 420 m²/kg; bulk density: 1,250 kg/m³) whose chemical composition was as follows.

| | |
|---|---|
| Silicon dioxide | 25 % by wt. |
| Aluminum oxide | 1.9 % by wt. |
| Ferric oxide | 0.33 % by wt. |
| Calcium oxide | 69 % by wt. |
| Magnesium oxide | 0.58 % by wt. |
| Sodium oxide | 0.25 % by wt. |
| Sulfur trioxide | 2.1 % by wt. |
| Chlorine | 0.01 % by wt. |

An acrylic resin emulsion was prepared by adding 335 % by wt. of pulverized acrylic resin (average size of particles: about 1 µm), which was composed of methyl methacrylate resin and ethyl acrylate resin, to 665 % by wt. of alkali-ion water (half-band width of ¹⁷O nuclear magnetic-resonance signal: 95 Hz; pH: 9.0), accompanied by vigorous stirring. An acrylic resin composite (resin mortar) was then produced by blending 1 kg of the above-mentioned powder component and 215 ml of the resin emulsion.

The slump value (as an indication of fluidity) of the acrylic resin composite was 25 according to JIS R5201 and A6916.

Test pieces (size of each: 4 x 4 x 16 cm) were prepared using cement, sand, and pebbles in a weight ratio of 1:1:2, based on JIS R5201.

After curing for 28 days, the test pieces were coated with the above-mentioned acrylic resin composite to a thickness of 2 mm by a roller and then cured at 20°C and 65% relative humidity. The extent of the hardening and the compressive strength of each test piece were measured after curing for 24 minutes, 1 day, 2 days, 3 days, 4 days, 5 days, and 7 days, respectively, based on JIS R5201 (The measurements were conducted at the Japan Testing Center for Construction Materials).

The test results are shown in Table 2.

**Table 2.**

| Relation Between Curing Time and Extent of Hardening/Compression Strength When Using Alkali-Ion Water of pH 9.0 | |
|---|---|
| **Curing Time** | **Extent of Hardening/Compression Strength** |
| 0-30 min. | No change |
| 35-40 min. | Initial hardening (pot life) |
| 60-120 min. | Became dry to the touch |
| 180-240 min. | Became hard enough so that a person could walk on it |
| 240 min. | 82 kgf/cm² |
| 1 days (24 hours) | 216 kgf/cm² |
| 2 days | 295 kgf/cm² |
| 3 days | 356 kgf/cm² |
| 4 days | 422 kgf/cm² |
| 5 days | 505 kgf/cm² |
| 7 days | 575 kgf/cm² |

### Comparative Example 2: Hardening of Acrylic Resin Composite Prepared Using Tap Water

An acrylic resin composite was prepared and evaluated in a manner similar to that of Example 2, except that tap water whose ¹⁷O nuclear magnetic-resonance signal had a half-band width of 135 Hz was used instead of the alkali-ion water.

The slump value was 21. The hardening and compression-strength results are shown in Table 3.

**Table 3.**

| Relation Between Curing Time and Extent of Hardening/Compression Strength When Using Tap Water | |
|---|---|
| **Curing Time** | **Extent of Hardening/Compression Strength** |
| 0-45 min. | No change is admitted |
| 50 min. | Initial hardness is admitted (pot life) |
| 1 days (24 hours) | 172 kgf /cm² |

The results show that the acrylic resin composite (resin mortar) using the alkali-ion water, whose half-band width of ¹⁷O nuclear magnetic-resonance signals was 95 Hz and whose pH was 9.0, was superior to the composite shown in this Comparative Example 2 in regard to fluidity, extent of hardening, and compression strength after curing for a shorter time. This indicates that the effects of the structural phase change had extended to the acrylic resin composites.

### Example 3: Physical Properties of Acrylic Resin Composite Using Alkaline Water of pH 8.5

An acrylic resin composite was prepared and evaluated in a manner similar to that of Example 2, except that tap water of pH 8.5 and whose ¹⁷O nuclear magnetic-resonance signal had a half-band width of 95 Hz was used.

Based on JIS R5201, test pieces (size of each: 4 x 4 x 16 cm) were prepared using cement, sand, and pebbles at a ratio of 1:1:2 by weight. After curing for 28 days, the test pieces were coated with the above-mentioned acrylic resin composite to a thickness of 2 mm by a roller and then cured for an additional 14 days. The physical properties shown in Table 4 were measured for each of the test pieces (the measurements were conducted at Japan Testing Center for Construction Materials). The results are shown in Table 4.

**Table 4.**

| Physical Properties of Acrylic Resin Composites When Using Tap Water of pH 8.5 and Half-Band Width of 95 Hz | | |
|---|---|---|
| **Property** | **Method** | **Result** |
| Compression strength | JIS R5201 | 680 kgf/cm² |
| Bending strength | JIS R5201 | 180 kgf/cm² |
| Adhesive strength | JIS A6916 | 48 kgf/cm² |
| Shear strength | JIS A1113 | 85 kgf/cm² |
| Tensile strength | JIS A1113 | 52 kgf/cm² |
| Waterproofing | JIS A1404 | 0.2 mg |
| Shrinkage after drying | JIS A1129 | 0.06% |

### Comparative Example 3: Physical Properties of Acrylic-Resin Composite Using Tap Water

An acrylic resin composite was prepared and evaluated in a manner similar to Example 2, except that tap water whose ¹⁷O nuclear magnetic-resonance signal had a half-band width of 135 Hz was used. The results are shown in Table 5.

**Table 5.**

| Physical Properties of Acrylic-Resin Composites When Using Tap Water Having Half-Band Width of 135 Hz | | |
|---|---|---|
| **Property** | **Method** | **Result** |
| Slump value | | 21 |
| Compression strength | JIS R5201 | 525 kgf/cm² |
| Bending strength | JIS R5201 | 115 kgf/cm² |
| Adhesive strength | JIS A6916 | 35 kgf/cm² |
| Shear strength | JIS A1113 | 64 kgf/cm² |
| Tensile strength | JIS A1113 | 28 kgf/cm² |
| Waterproofing | JIS A1404 | 0.5 mg |
| Shrinkage after drying | JIS A1129 | 0.089% |

The results show that the acrylic resin composite prepared using the alkali-ion water of 95 Hz of the half-band widths of ¹⁷O nuclear magnetic-resonance signal and a pH of 9.0 was superior to the one using tap water shown in this Comparative Example 3 in regard to compression strength, bending strength, shear strength, tensile strength, water proofing, and shrinkage after drying.

### Industrial Applicability

Thus, the acrylic resin composite of the present invention is superior to prior-art acrylic resin composites in the following respects.
1. The resin emulsion can increase the amount of the acrylic resin (adhesive filler) that can be compounded without increasing the viscosity of the emulsion and while retaining the same degree of homogeneity. Due to the structural phase change, a high adhesive force to concrete is attained such as never would be expected in the prior-art acrylic resin composites.
2. Due to the synergistic effect of the structural phase change of the emulsion and the permanent electric charge of garnet, the acrylic resin composite decreases the permeability of acrylic resin composite into concrete and increases the composite's waterproofing property when the composite is used for maintenance or reinforcement of existing concrete structures.
3. Due to the improved hardening properties of the acrylic resin composite of this invention, it can harden quickly, and the composite's bending strength, shear strength, tensile strength, and compressive strength are enhanced. In addition, when used in constructing structures, the pot life or the time required for preliminary hardening can be shortened.

## Claims

1. An acrylic resin composite comprising: (a) a powder component that includes (a-1) a pulverized aggregate consisting of minerals having a permanent electric charge, and (a-2) a pulverized low-alkaline cement composed of the of the components listed below; and (b) an acrylic resin emulsion that is prepared by homogenizing an acrylic resin that includes at least methyl methacrylate and ethyl acrylate in alkali-ion water.
| | |
|---|---|
| Silicon dioxide | 20-30 % by weight (hereinafter "% by wt.") |
| Aluminum oxide | 0.1-2.5 % by wt. |
| Ferric oxide | 0.01-1.00 % by wt. |
| Calcium oxide | 60-80 % by wt. |
| Magnesium oxide | 0.2-1.0 % by wt. |
| Sodium oxide | 0.2-0.4 % by wt. |

2. An acrylic resin composite, wherein said alkali-ion water has a pH of 8-10 and a half-band width of 90 ± 10 Hz in its ¹⁷O nuclear magnetic-resonance signal.

3. An acrylic resin composite of Claim 1 or Claim 2, wherein said powder component includes 55 ± 15 % by wt. of said pulverized aggregate and 45 ± 15 % by wt. of said pulverized low-alkaline cement, and wherein said powder component is mixed with said resin emulsion at a ratio of 210-250 ml of said resin emulsion to 1 kg of said powder component.
